# EUROPEAN PATENT APPLICATION

(11) **EP 1 323 786 A1**
(43) Date of publication of application: **02.07.2003**
(21) Application number: 02028382.6
(22) Date of filing: 18.12.2002
(51) Int. Cl.: C09D 7/00

(54) **Matting agent for paint and energy beam-hardening paint composition**

(30) Priority: 26.12.2001 JP 2001394159
(71) Applicant: Kotobuki Chemical Ind., Co., Ltd., Minamisaitama-gun, Saitama-ken (JP)
(72) Inventor: Iwahashi, Shiro, Kotobuki Chemical Ind., Co., Ltd., Minamisaitama-gun, Saitama-ken (JP); Okada, Ryou, c/o Kotobuki Chemical Ind., Co., Ltd., Minamisaitama-gun, Saitama-ken (JP)
(74) Representative: Vetter, Hans, Dipl.-Phys. Dr.

(57) **Abstract**

A matting agent for paint which achieves a great matting effect even when added in a small amount to an energy beam-hardening paint compound and an energy beam-hardening paint compound containing the matting agent for paint. While micronized silica is stirred in a mixer, a solution consisting of chloroform and beeswax dissolved therein is sprayed on the micronized silica with a sprayer. The micronized silica after the spraying is stirred in the mixer for ten minutes and is dried in a dryer at a temperature of 70°C. After pulverizing aggregates using a compact air mill, a matting agent comprising 100 weight parts of micronized silica coated with 12 weight parts of beeswax is obtained. When dispersed in an epoxy acrylate resin-based paint, the matting agent achieves a great matting effect with a substantially small addition compared with a conventional matting agent.

## Description

### BACKGROUND OF THE INVENTION

### (i) Field of the Invention

The present invention relates to a matting agent for paint and an energy beam-hardening paint compound.

### (ii)Description of the Related Art

Micronized silica has been used as a conventional matting agent for paint. It has also been performed that by surface treating the surface of the micronized silica for this purpose with petroleum wax such as microcrystalline wax, the affinity of the micronized silica toward an organic material is increased, and thus the dispersibility of micronized silica in the paint compound is improved.

These days, growing attention to the environmental problems encourages the use of paint which requires no or little use of an organic solvent instead of solvent type paint. Particularly, UV-cure paint (hereinafter referred to also as "UV paint") is becoming more popular today because it is suitable for flow line painting due to the fast hardening speed and the low energy required for hardening.

However, the UV paint, which is a high solid paint with a relatively large solid content, has the feature that the paint film becomes thinner to only a small extent during film forming. This involves the problem that even when the same amount of conventional matting agent is added to the UV paint as in the case of a solvent type paint, particles of micronized silica do not appear to the paint film surface, and therefore the desired matting effect is not achieved. On the other hand, when an uneven paint film surface is formed by adding a large amount of silica particles having a relatively large size to the above UV paint, other problems are presented that the paint film surface is too coarse, that the viscosity of the paint is increased, and that the durability of the paint film is decreased.

These problems, which are seen also in electron beam-hardening paint besides in UV-cure paint, may be common to different types of energy beam-hardening paint in which hardening of the paint film is performed by means of UV rays or electron beams.

The present invention made to solve the above problems has a principal object to provide a matting agent for paint which achieves a great matting effect even when added in a small amount to an energy beam-hardening paint compound and to provide an energy beam-hardening paint compound containing the matting agent for paint.

### SUMMARY OF THE INVENTION

The above and other objects are attained by the present invention made by the inventors who found out that when a wax containing a higher fatty acid ester as the main component is used as a surface treating agent for the surface of inorganic fine powder, an improved matting effect can be achieved by adding only a relatively small amount of such surface treated inorganic fine powder to a UV paint.

Specifically, a matting agent for paint according to the present invention comprises an inorganic fine powder having a surface treated with a wax containing a higher fatty acid ester as the main component.

Among a variety of substances which can be used as the inorganic fine powder, it is preferable to use, for example, one selected from the group consisting of micronized silica, silica-alumina fine powder, alumina fine powder, and a mixture of two or more thereof. Besides these substances, an inorganic fine powder of talc, calcium carbonate or titanium dioxide, for example, may be used.

Typical examples of micronized silica are precipitated silica, silica gel or silica pyrogenic slica. Although the manufacturing process for these various kinds of micronized silicas is not limited to a particular one, precipitating silica or silica gel is required to be manufactured by mixing sodium silicate as the main material with a mineral acid such as sulfuric acid, hydrochloric acid or nitric acid. Pyrogenic silica is required to be manufactured, for example, by burning silicon tetrachloride with hydrogen flame.

The micronized silica preferably has an average particle diameter of about 1µm to about 20µm. In the case where the particle diameter is less than 1 µ m, the amount of particles which do not contribute to matting of the paint film increases, with the result that the matting effect per unit of added micronized silica decreases. Accordingly, it may be necessary to add a large amount of micronized silica to obtain the same degree of matting effect. Also, since the micronized silica tends to aggregate and dispersion of the same becomes difficult in the paint, spots or aggregated seeds may be formed in the paint film surface and the viscosity of the paint may be increased.

In the opposite case where the amount of particles having a particle diameter of more than 20µm is increased, the appearance of the paint film becomes rough. Besides, such large particles tend to settle in the paint, which may prevent obtaining a uniformly matte paint film. Technique for making silica particles having the above-mentioned particle diameter is not limited to a particular one. For example, it is possible, depending on the manufacturing method, to control the manufacturing conditions so as to directly produce micronized silica having an average particle diameter of about 1µm to about 20 µm or to produce silica lumps then pulverize them and classify the particles to obtain an average particle diameter of about 1 µm to about 20µm.

The inorganic fine powder is preferably a fine powder comprising porous particles, which allows the wax and the solvent to penetrate the pores, thereby increasing the affinity of the inorganic fine powder toward the paint compound. In this case, it is easier to disperse the inorganic fine powder in the paint compound.

A significant feature of the present invention is that the wax to be used for surface treatment of the inorganic fine powder is a wax containing a higher fatty acid ester as the main component. Due to a disadvantage in the cost as compared with conventional petroleum waxes, a wax containing a higher fatty acid ester as the main component has not been used so far for surface treatment of matting agents.

Typical examples of waxes containing a higher fatty acid ester as the main component are vegetable waxes such as carnauba wax, candelilla wax, rice wax, and Japan wax; animal waxes such as beeswax and whale wax; and mineral waxes such as montan wax. According to the present invention, any wax containing, as the main component, fatty acid ester having at least 16 carbon atoms, a mixture of fatty acid ester and fatty acid, and the like may be employed optionally. These waxes may be natural waxes or similar synthetic waxes.

The surface treatment of the inorganic fine powder with these waxes may be performed according to any conventional method, such as a method of spray coating a wax dissolved into a solvent on inorganic fine powder while flowing or moving the inorganic fine powder, a method of adding inorganic fine powder in the form of slurry to a solvent containing a wax and spray drying the same, and a method of adding an inorganic material and a wax at the same time while heating them in a fluid energy mill, thereby pulverizing and coating the inorganic material simultaneously.

The matting agent for paint constituted as above, in which the surface of inorganic fine powder is surface treated with a wax containing a higher fatty acid ester as the main component, a great matting effect can be achieved even when added to an energy beam-hardening paint compound, unlike the case with a matting agent surface treated with a conventional petroleum wax. Therefore, an energy beam-hardening paint compound containing the matting agent for paint allows an appropriate unevenness to be formed in the paint film surface, and thus can provide the paint film having a sufficiently matte surface.

Although the above-described fact was found by the inventors through a variety of experiments they had conducted, the exact reason for enhancing the matting effect has not yet been clarified.

It may be understood, however, with reference to the after-mentioned several embodiments, that when inorganic fine powder surface treated with a wax containing a higher fatty acid ester as the main component is added to an energy-hardening paint compound, a great matting effect which cannot be obtained by conventional matting agents is achieved. Now, the experimental results will be described in detail.

### DETAILED DESCRIPTION OF PREFERRED EMBODIMENTS

### [Embodiment 1]

While 400g of micronized silica ("SYLYSIA 350" by FUJI SILYSIA CHEMICAL LTD., average particle diameter: 3.9 µm, oil absorption: 310ml/100g) was stirred in a mixer, a solution consisting of 500ml of chloroform and 48g of beeswax ("Bleached Beeswax" by YONEYAMA YAKUHIN KOGYO CO., LTD.) dissolved therein is sprayed on the micronized silica with a sprayer.

The micronized silica was continued to be stirred in the mixer for ten minutes after the spraying, then was dried at a temperature of 70°C in a drier. After aggregates of micronized silica were pulverized with a compact air mill, a matting agent comprising 100 weight parts of micronized silica coated with 12 weight parts of beeswax was obtained. Then, 3 weight parts, 6 weight parts and 8 weight parts of the matting agent were added, respectively, to 100 weight parts of an epoxy acrylate resin-based paint. Each mixture, was stirred in a homomixer at 4000rpm for 5 minutes to disperse the matting agent in the paint, with the result that three kinds of paint compounds containing different amounts of added matting agent were prepared.

Each of the three kinds of paint compounds was applied to a plate with a film applicator to form a paint film having a thickness of 100 µm, and the paint film was hardened using a UV-cure system.

### [Comparison Example 1]

6 weight parts and 8 weight parts of untreated micronized silica ("SYLYSIA 350" by FUJI SILYSIA CHEMICAL LTD., average particle diameter: 3.9 µm, oil absorption: 310ml/100g) as a matting agent were added, respectively, to 100 weight parts of an epoxy acrylate resin-based paint. Each mixture was stirred in a homomixer at 4000rpm for 5 minutes to disperse the matting agent in the paint, with the result that two kinds of paint compounds containing different amounts of added matting agent were prepared.

Each of the two kinds of paint compounds was applied to a plate with a film applicator to form a paint film having a thickness of 100 µm, and the paint film was hardened using a UV-cure system.

### [Comparison between Embodiment 1 and Comparison Example 1]

With respect to the three kinds of hardened paint films obtained in Embodiment 1 and the two kinds of hardened paint films obtained in Comparison Example 1, the matting degree was measured using a gloss meter. The 60 degree gloss values are indicated in Table 1 below.

**[Table 1]**

| Amount of Added Matting Agent | Embodiment 1 | Comparison Example 1 |
|---|---|---|
| 3 weight parts | 46 | --- |
| 6 weight parts | 16 | 67 |
| 8 weight parts | 6.5 | 55 |

As clearly shown by Table 1, the matting agent of Embodiment 1, which was subjected to coating treatment with beeswax, achieved a great matting effect with a substantially small addition to the epoxy acrylate resin-based paint compared with the matting agent of Comparison Example 1, which was not subjected to coating treatment. Accordingly, when the same degree of matting effect as in the case of the matting agent of Comparison Example 1 is desired, the required amount of matting agent of Embodiment 1 to be added can be reduced. When the same amount of the matting agent of Embodiment 1 is added as in the case of the matting agent of Comparison Example 1, a greater matting effect can be achieved.

### [Embodiment 2]

A matting agent was prepared in the same manner as in Embodiment 1. Then, 3 weight parts, 6 weight parts and 8 weight parts of matting agent were added, respectively, to 100 weight parts of an polyether acrylate resin-based paint. Each mixture was stirred in a homomixer at 4000rpm for 5 minutes to disperse the matting agent in the paint, with the result that three kinds of paint compounds containing different amounts of added matting agent were prepared.

Each of the three kinds of paint compounds was applied to a plate with a film applicator to form a paint film having a thickness of 100µm, and the paint film was hardened using a UV-cure system.

### [Comparison Example 2]

6 weight parts and 8 weight parts of the same micronized silica as in Comparison Example 1 were added, respectively, as a matting agent to 100 weight parts of an polyether acrylate resin-based paint. Each mixture was stirred in a homomixer at 4000rpm for 5 minutes to disperse the matting agent in the paint, with the result that two kinds of paint compounds containing different amounts of added matting agent were prepared.

Each of the two kinds of paint compounds was applied to a plate with a film applicator to form a paint film having a thickness of 100 µm, and the paint film was hardened using a UV-cure system.

### [Comparison between Embodiment 2 and Comparison Example 2]

With respect to the three kinds of hardened paint films obtained in Embodiment 2 and the two kinds of hardened paint films obtained in Comparison Example 2, the matting degree was measured using a gloss meter. The 60 degree gloss values are indicated in Table 2 below.

**[Table 2]**

| Amount of Added Matting Agent | Embodiment 2 | Comparison Example 2 |
|---|---|---|
| 3 weight parts | 76 | --- |
| 6 weight parts | 28 | 67 |
| 8 weight parts | 19 | 55 |

As clearly shown by Table 2, the matting agent of Embodiment 2, which was subjected to coating treatment with beeswax, achieved a great matting effect with a substantially small addition to the polyether acrylate resin-based paint compared with the matting agent of Comparison Example 2, which was not subjected to coating treatment. Accordingly, when the same degree of matting effect as in the case of the matting agent of Comparison Example 2 is desired, the required amount of matting agent of Embodiment 2 to be added can be reduced. When the same amount of the matting agent of Embodiment 2 is added as in the case of the matting agent of Comparison Example 2, a greater matting effect can be achieved.

### [Embodiment 3]

Sodium silicate (SiO₂ 25 weight percent, molar ratio of SiO₂ to Na₂O: 3.3) and sulfuric acid (H₂So₄ 42 weight percent) are mixed using a mixing nozzle under the condition that the flow rate of sodium silicate is 15 liter/min and the flow rate of sulfuric acid is 7 liter/min to obtain silica hydrosol. The temperature during this process was 50°C. The silica hydrosol gelated to form silica hydrogel in about 5 minutes. Subsequently, the silica hydrogel was sieved to the size of about 10mm using a sieve, then the sieved silica hydrogel was subjected to hydrothermal treatment for 6 hours under the condition of 90°C and pH9.5 and was washed with water. A small amount of sample of the silica hydrogel was dried with a drier at a temperature of 180°C for 5 hours, and silica hydrogel having a specific surface area of 285m²/g and a pore volume of 1.16ml/g was obtained.

Then, the silica hydrogel corresponding to 5kg/min of anhydrous silica and 0.6kg/min of beeswax ("Bleached Beeswax" by YONEYAMA YAKUHIN KOGYO CO., LTD) were mixed and pulverized with a jet mill using heating steam at a temperature of 600°C under a pressure of 5.5kg/cm² to obtain a matting agent comprising 100 weight parts of micronized silica coated with 12 weight parts of beeswax.

Subsequently, 1 weight part, 3 weight parts and 6 weight parts of the matting agent were added, respectively, to 100 weight parts of an epoxy acrylate resin-based paint. Each mixture was stirred in a homomixer at 4000rpm for 5 minutes, with the result that three kinds of paint compounds containing different amounts of added matting agent were prepared.

Each of the three kinds of paint compounds was applied to a plate with a film applicator to form a paint film having a thickness of 100 µm, and the paint film was hardened using a UV-cure system.

### [Embodiment 4]

The same silica hydrogel as in Embodiment 3 corresponding to 5kg/min of anhydrous silica and 0.3kg/min of beeswax ("Bleached Beeswax" by YONEYAMA YAKUHIN KOGYO CO., LTD) were mixed and pulverized with a jet mill using heating steam at a temperature of 600°C under a pressure of 5.5kg/cm² to obtain a matting agent comprising 100 weight parts of micronized silica coated with 6 weight parts of beeswax.

Subsequently, 1 weight part, 3 weight parts and 6 weight parts of the matting agent were added, respectively, to 100 weight parts of an epoxy acrylate resin-based paint. Each mixture was stirred in a homomixer at 4000rpm for 5 minutes, with the result that three kinds of paint compounds containing different amounts of added matting agent were prepared.

Each of the three kinds of paint compounds was applied to a plate with a film applicator to form a paint film having a thickness of 100 µm, and the paint film was hardened using a UV-cure system.

### [Comparison Example 3]

Only the same silica hydrogel as in Embodiment 3 was pulverized with a jet mill using heating steam at a temperature of 600°C under a pressure of 5.5kg/cm² to obtain a matting agent consisting only of micronized silica.

Subsequently, 1 weight part, 3 weight parts and 6 weight parts of the matting agent were added, respectively, to 100 weight parts of an epoxy acrylate resin-based paint. Each mixture was stirred in a homomixer at 4000rpm for 5 minutes, with the result that three kinds of paint compounds containing different amounts of added matting agent were prepared.

Each of the three kinds of paint compounds was applied to a plate with a film applicator to form a paint film having a thickness of 100µm, and the paint film was hardened using a UV-cure system.

### [Comparison among Embodiment 3, Embodiment 4 and Comparison Example 3]

With respect to the above three kinds of matting agent obtained in Embodiment 3, Embodiment 4 and Comparison Example 3, respective physical property values are indicated in Table 3 below.

**[Table 3]**

| | Embodiment 3 | Embodiment 4 | Comparison Example 3 |
|---|---|---|---|
| Average Particle Diameter (µ m) | 6.3 | 6.3 | 6.4 |
| Ignition Loss (weight percent) | 14.4 | 9.5 | 5.0 |
| Oil Absorption (ml/100g) | 253 | 276 | 300 |
| pH | 7.6 | 7.6 | 7.5 |
| Whiteness | 95 | 95 | 96 |

With respect to the three kinds of hardened paint films obtained in Embodiment 3, the three kinds of hardened paint films obtained in Embodiment 4 and the three kinds of hardened paint films obtained in Comparison Example 3, the matting degree was measured using a gloss meter. The 60 degree gloss values are indicated in Table 4 below.

**[Table 4]**

| Amount of Added Matting Agent | Embodiment 3 | Embodiment 4 | Comparison Example 3 |
|---|---|---|---|
| 1 weight part | 91 | 94 | 95 |
| 3 weight parts | 6.4 | 39 | 90 |
| 6 weight parts | 5.2 | 9.3 | 74 |

As clearly shown by Table 4, the matting agents of Embodiment 3 and Embodiment 4, which were subjected to coating treatment with beeswax, achieved a great matting effect with a substantially small addition to the epoxy acrylate resin-based paint compared with the matting agent of Comparison Example 3, which was not subjected to coating treatment. Accordingly, when the same degree of matting effect as in the case of the matting agent of Comparison Example 3 is desired, the required amount of the matting agent of Embodiment 3 or Embodiment 4 to be added can be reduced. When the same amount of the matting agent of Embodiment 3 or Embodiment 4 is added as in the case of the matting agent of Comparison Example 3, a greater matting effect can be achieved.

### [Embodiment 5]

A matting agent was prepared in the same manner as in Embodiment 3. Then, 1 weight part, 3 weight parts, 6 weight parts and 8 weight parts of the matting agent were added, respectively, to 100 weight parts of an polyether acrylate resin-based paint. Each mixture was stirred in a homomixer at 4000rpm for 5 minutes to disperse the matting agent in the paint, with the result that four kinds of paint compounds containing different amounts of added matting agent were prepared.

Each of the four kinds of paint compounds was applied to a plate with a film applicator to form a paint film having a thickness of 100µm, and the paint film was hardened using a UV-cure system.

### [Embodiment 6]

A matting agent was prepared in the same manner as in Embodiment 4. Then, 1 weight part, 3 weight parts, 6 weight parts and 8 weight parts of matting agent were added, respectively, to 100 weight parts of an polyether acrylate resin-based paint. Each mixture was stirred in a homomixer at 4000rpm for 5 minutes to disperse the matting agent in the paint, with the result that four kinds of paint compounds containing different amounts of added matting agent were prepared.

Each of the four kinds of paint compounds was applied to a plate with a film applicator to form a paint film having a thickness of 100 µm, and the paint film was hardened using a UV-cure system.

### [Comparison Example 4]

1 weight part, 3 weight parts, 6 weight parts and 8 weight parts of the same micronized silica as in Comparison Example 3 were added, respectively, as a matting agent to 100 weight parts of an polyether acrylate resin-based paint. Each mixture was stirred in a homomixer at 4000rpm for 5 minutes to disperse the matting agent in the paint, with the result that four kinds of paint compounds containing different amounts of added matting agent were prepared.

Each of the four kinds of paint compounds was applied to a plate with a film applicator to form a paint film having a thickness of 100 µm, and the paint film was hardened using a UV-cure system.

### [Comparison among Embodiment 5, Embodiment 6 and Comparison Example 4]

With respect to the four kinds of hardened paint films obtained in Embodiment 5, the four kinds of hardened paint films obtained in Embodiment 6 and the four kinds of hardened paint films obtained in Comparison Example 4, the matting degree was measured using a gloss meter. The 60 degree gloss values are indicated in Table 5 below.

**[Table 5]**

| Amount of Added Matting Agent | Embodiment 5 | Embodiment 6 | Comparison Example 4 |
|---|---|---|---|
| 1 weight part | 88 | 89 | 90 |
| 3 weight parts | 73 | 77 | 85 |
| 6 weight parts | 21 | 47 | 78 |
| 8 weight parts | 14 | 34 | 76 |

As clearly shown by Table 5, the matting agents of Embodiment 5 and Embodiment 6 which were subjected to coating treatment with beeswax, achieved a great matting effect with a substantially small addition to the polyether acrylate resin-based paint compared with the matting agent of Comparison Example 4, which was not subjected to coating treatment. Accordingly, when the same degree of matting effect as in the case of the matting agent of Comparison Example 4 is desired, the required amount of the matting agent of Embodiment 5 or Embodiment 6 to be added can be reduced. When the same amount of the matting agent of Embodiment 5 or Embodiment 6 is added as in the case of the matting agent of Comparison Example 4, a greater matting effect can be achieved.

### [Embodiment 7]

According to the same process as in Embodiment 1 except that Japan wax (deodorized refined white wax by CERA RICA NODA CORPORATION) was used instead of beeswax, a matting agent comprising 100 weight parts of micronized silica coated with 12 weight parts of Japan wax was obtained.

Then, 1 weight part, 3 weight parts, 6 weight parts and 8 weight parts of the matting agent were added, respectively, to 100 weight parts of an epoxy acrylate resin-based paint. Each mixture was stirred in a homomixer at 4000rpm for 5 minutes to disperse the matting agent in the paint, with the result that four kinds of paint compounds containing different amounts of added matting agent were prepared.

Each of the four kinds of paint compounds was applied to a plate with a film applicator to form a paint film having a thickness of 100 µm. and the paint film was hardened using a UV-cure system.

### [Embodiment 8]

According to the same process as in Embodiment 1 except that carnauba wax (by CERA RICA NODA CORPORATION) was used instead of beeswax, a matting agent comprising 100 weight parts of micronized silica coated with 12 weight parts of carnauba wax was obtained.

Then, 1 weight part, 3 weight parts, 6 weight parts and 8 weight parts of the matting agent were added, respectively, to 100 weight parts of an epoxy acrylate resin-based paint. Each mixture was stirred in a homomixer at 4000rpm for 5 minutes to disperse the matting agent in the paint, with the result that four kinds of paint compounds containing different amounts of added matting agent were prepared.

Each of the four kinds of paint compounds was applied to a plate with a film applicator to form a paint film having a thickness of 100µm, and the paint film was hardened using a UV-cure system.

### [Embodiment 9]

According to the same process as in Embodiment 1 except that candelilla wax (by CERA RICA NODA CORPORATION) was used instead of beeswax, a matting agent comprising 100 weight parts of micronized silica coated with 12 weight parts of candelilla wax was obtained.

Then, 1 weight part, 3 weight parts, 6 weight parts and 8 weight parts of the matting agent were added, respectively, to 100 weight parts of an epoxy acrylate resin-based paint. Each mixture was stirred in a homomixer at 4000rpm for 5 minutes to disperse the matting agent in the paint, with the result that four kinds of paint compounds containing different amounts of added matting agent were prepared.

Each of the four kinds of paint compounds was applied to a plate with a film applicator to form a paint film having a thickness of 100 µm, and the paint film was hardened using a UV-cure system.

### [Comparison among Embodiment 7, Embodiment 8 and Embodiment 9]

With respect to the four kinds of hardened paint films obtained in Embodiment 7, the four kinds of hardened paint films obtained in Embodiment 8 and the four kinds of hardened paint films obtained in Embodiment 9, the matting degree was measured using a gloss meter. The 60 degree gloss values are indicated in Table 6 below.

**[Table 6]**

| | | | |
|---|---|---|---|
| Amount of Added Matting Agent | Embodiment 7 | Embodiment 8 | Embodiment 9 |
| 1 weight part | 95 | 93 | 69 |
| 3 weight parts | 83 | 77 | 14 |
| 6 weight parts | 57 | 26 | 8.7 |
| 8 weight parts | 43 | 10 | 6.9 |

As clearly shown by Table 6, the matting agents of Embodiment 7, Embodiment 8 and Embodiment 9 which were subjected to coating treatment with Japan wax, carnauba wax and candelilla wax, respectively, achieved a good matting effect when added to the epoxy acrylate resin-based paint.

### [Comparison Example 5]

According to the same process as in Embodiment 3 except that the manufacturing condition of using beeswax at the flow rate of 0.6kg/min is replaced by using microcrystalline wax (by NIPPON SEIRO CO., LTD.) at the flow rate of 0.3kg/min, a matting agent comprising 100 weight parts of micronized silica coated with 6 weight parts of microcrystalline wax was obtained.

The physical properties of the matting agent were represented by an average particle diameter of 3.7 µ m, an oil absorption of 281ml/100g and pH7.5.

Then, 6 weight parts of the matting agent were added to 100 weight parts of an epoxy acrylate resin-based paint, and the mixture was stirred in a homomixer at 4000rpm for 5 minutes, with the result that a paint compound was prepared.

The paint compound was applied to a plate with a film applicator to form a paint film having a thickness of 100 µm, and the paint film was hardened using a UV-cure system.

With respect to the hardened paint film, the matting degree was measured using a gloss meter. The 60 degree gloss value was 70, which indicated a poor matting effect of the matting agent when added to the epoxy acrylate resin-based paint.

[00100] As described above, according to the matting agents for paint in the respective embodiments, in which the surfaces of the inorganic fine powder are surface treated with a wax containing a higher fatty acid ester as the main component, a great matting effect can be achieved even when added to a UV-cure paint compound, unlike the case with a matting agent surface treated with a conventional petroleum wax (e.g. Comparison Example 5).

Therefore, a UV-cure paint compound containing the matting agent for paint in each of the respective embodiments can form an appropriately uneven surface of the paint film, and thus can provide a paint film having a sufficiently matte surface.

Although the present invention has been described with reference to the embodiments, the present invention should not be limited to the above described embodiments, but may be embodied in various forms.

For example, while the matting agent of the present invention is added to a UV-cure paint compound in the embodiments, a great matting effect may also be achieved compared with the case of using a conventional matting agent for paint, even when the matting agent of the present invention is added to an electron beam-hardening paint compound.

## Claims

1. A matting agent for paint comprising an inorganic fine powder surface treated with a wax containing a higher fatty acid ester as the main component.

2. The matting agent for paint as set forth in claim 1, wherein the inorganic fine powder is selected from the group consisting of micronized silica, silica-alumina fine powder, alumina fine powder, and a mixture of at least two thereof.

3. The matting agent for paint as set forth in claim 2, wherein the micronized silica is selected from the group of precipitating silica, silica gel, and pyrogenic silica.

4. The matting agent for paint as set forth in claim 2, wherein the micronized silica has an average particle diameter of 1 µm to 20 µm.

5. The matting agent for paint as set forth in claim 1, wherein the inorganic fine powder is a fine powder comprising porous particles.

6. An energy beam-hardening paint compound containing a matting agent for paint as set for in claim 1.
